# EUROPÄISCHE PATENTANMELDUNG

(11) **EP 4 376 112 A1**
(43) Veröffentlichungstag der Anmeldung: **29.05.2024**
(21) Anmeldenummer: 23210814.2
(22) Anmeldetag: 20.11.2023
(51) Int. Cl.: H01M 4/04, H01M 4/139, H01M 10/0525

(54) **VERFAHREN SOWIE PROZESSANORDNUNG ZUR HERSTELLUNG EINER ELEKTRODE FÜR EINE BATTERIEZELLE**

(30) Priorität: 22.11.2022 DE 102022130903
(71) Anmelder: Volkswagen Aktiengesellschaft, 38440 Wolfsburg (DE); CT Systems GmbH & Co. KG, 79664 Wehr (DE)
(72) Erfinder: BUSSWINKEL, Ludger, 38106 Braunschweig (DE); SCHOPF, Sven, 38116 Braunschweig (DE); REUBER, Sebastian, 01099 Dresden (DE); SCHMIDT-LOBACH, Roland, 39356 Hörsingen (DE); SCHLACHTER, Martin, 79664 Wehr (DE)
(74) Vertreter: Bierschneider, Walter

(57) **Zusammenfassung**

Die Erfindung betrifft ein Verfahren zur Herstellung einer Elektrode für eine Batteriezelle, mit einem Beschichtungsprozess, in dem eine Stromableiterfolie (1) mittels eines Austragssystems (9) mit Elektrodenmaterial (3) beschichtet wird, wobei das Austragssystem (9) ein Walzenpaar mit rotierenden Kalanderwalzen (27) aufweist, die über einen Walzenspalt (25) voneinander beabstandet sind, und wobei eine pulverförmige Ausgangskomponente (5) des Elektrodenmaterials (3) im Trockenzustand in einen Walzenspalt-Einzugsbereich (23) gefüllt und im Walzenspalt (25) unter Druck und Scherung zu einem Elektrodenmaterial-Film (43, 43') kompaktiert wird, der auf die Stromableiterfolie (1) aufgebracht wird. Erfindungsgemäß wird mit dem Austragssystem (9) eine zeitlich und räumlich konstante und/oder einstellbare Pulverdosierung in den Walzenspalt (25) gewährleistet.

## Beschreibung

Die Erfindung betrifft ein Verfahren zur Herstellung einer Elektrode für eine Batteriezelle nach dem Oberbegriff des Anspruches 1 sowie eine Prozessanordnung zur Durchführung des Verfahrens nach Anspruch 10.

Eine Elektrode für eine Lithium-lonen-Batteriezelle weist in gängiger Praxis eine Stromableiterfolie auf, die ein- oder beidseitig mit Elektrodenmaterial beschichtet ist. Die Elektrode wird in einem Beschichtungsprozess gefertigt, in dem die Stromableiterfolie mit dem Elektrodenmaterial beschichtet wird. In einem konventionellen Beschichtungsprozess wird fertigungstechnisch aufwändig eine Nassbeschichtung durchgeführt, in der eine viskose Elektrodenmaterial-Masse mittels eines Austragssystems auf die Stromableiterfolie aufgetragen wird und anschließend in einer prozesstechnisch nachgeschalteten Trocknerstation getrocknet wird. Im Anschluss daran wird die mit dem Elektromaterial beschichtete Stromableiterfolie in einem Kalanderwalzwerk kompaktiert.

Aus der US 4 436 682 A ist eine Walzenverdichtung bekannt, in der ein fließfähiges thermoplastisches Polymerpulver einem Walzenspalt eines Walzenpaars von zusammenwirkend rotierenden Druckwalzen zugeführt wird. Das Polymerpulver wird unter Druckaufbau durch den Walzenspalt geführt, wodurch das Polymerpulver zu einem folienartigen Gegenstand geformt wird. Aus der US 2021 033 6241 A1 ist ein System zur Herstellung einer Elektrode für eine Batterie bekannt. Das System weist eine Mischeinheit au, die eine Pulvermischung aus aktivem Materialpulver, Bindemittelpulver und leitfähigem Materialpulver erzeugt. Zudem weist das System eine Formungseinheit auf, die aus der Pulvermischung einen Elektrodenfilm bildet.

Die Aufgabe der Erfindung besteht darin, ein Verfahren zur Herstellung einer Elektrode bereitzustellen, das im Vergleich zum Stand der Technik mit reduziertem Fertigungsaufwand sowie prozesssicher durchführbar ist.

Die Aufgabe ist durch die Merkmale des Anspruches 1 oder 10 gelöst. Bevorzugte Weiterbildungen der Erfindung sind in den Unteransprüchen offenbart.

Die Erfindung geht von einem Verfahren zur Herstellung einer Elektrode für eine Batteriezelle aus. Das Verfahren weist einen Beschichtungsprozess auf, in dem eine Stromableiterfolie mittels eines Austragssystems mit Elektrodenmaterial beschichtet wird. Das Austragssystem weist ein Walzenpaar mit rotierenden Kalanderwalzen auf, die über einen Walzenspalt voneinander beabstandet sind. Eine pulverförmige Ausgangskomponente des Elektrodenmaterials wird im Trockenzustand in einen Einzugsbereich des Walzenspalts gefüllt und dort unter Druck und Scherung zu einem Elektrodenmaterial-Film kompaktiert. Dieser wird am Walzenspalt-Auslauf in Richtung Stromableiterfolie geführt und dort aufgebracht. Gemäß dem kennzeichnenden Teil des Anspruches 1 wird mit dem Austragssystem eine zeitliche und räumliche, insbesondere konstante Pulverdosierung in den Walzenspalt gewährleistet.

Die zeitliche und räumliche, insbesondere konstante Pulverdosierung in den Walzenspalt wird mittels eines neuen Dosierkonzepts erzielt, dessen Merkmale nachfolgend beschrieben sind: So kann in einer technischen Umsetzung das Austragssystem ein Reservoir aufweisen, von dessen Austrittsöffnung die pulverförmige Ausgangskomponente unter Schwerkraftwirkung direkt in den Walzenspalt-Einzugsbereich abgeworfen werden kann. Alternativ dazu kann die pulverförmige Ausgangskomponente von der Austrittsöffnung des Reservoirs zunächst auf eine Transportrinne abgeworfen werden, entlang der es bis zu einem Transportrinnen-Ende, d.h. zu einer definierten Abwurfkante, gefördert wird. Von dort kann die pulverförmige Ausgangskomponente linienförmig in den Walzenspalt-Einzugsbereich abgeworfen werden.

Mit Hilfe des oben beschriebenen Austragssystems kann bevorzugt ein Pulveraustrag auf den Walzenspalt-Einzugsbereich über eine sich in Walzenaxialrichtung erstreckende Beschichtungsbreite erzielt werden. Die Beschichtungsbreite entspricht dabei in etwa der Breite der Transportrinne und/oder der Breite der Austrittsöffnung des Reservoirs.

Im Hinblick auf eine möglichst flächige, gleichmäßige Verteilung ist es bevorzugt, wenn die Austrittsöffnung des Reservoirs mit einem Sieb für die Pulverdosierung überdeckt ist, durch das die im Reservoir befindliche pulverförmige Ausgangskomponente unter Schwerkraftwirkung abgeworfen wird. Das Sieb kann mittels eines Anregers, etwa ein Ultraschall- oder ein elektrischer Anreger, in Schwingung versetzt werden.

Alternativ und/oder zusätzlich zum oben beschriebenen vibrationsangeregten Sieb kann auch die Transportrinne mittels eines solchem Anregers in Schwingung versetzt werden. Auf diese Weise wird ein räumlich und/oder zeitlich gesteuerter, insbesondere konstanter Pulverabfluß vom Reservoir bis zum Walzenspalt-Einzugsbereich gewährleistet. Zudem wird durch die schwingungsangeregte Transportrinne beziehungsweise dem schwingungsangeregten Sieb eine gleichmäßige, flächige Verteilung der pulverförmigen Ausgangskomponente über die gesamte Beschichtungsbreite gewährleistet.

Dem Austragssystem kann eine Dosiervorrichtung, insbesondere eine gravimetrische Wäge-Einheit prozesstechnisch vorgeschaltet sein. Mit Hilfe der Dosiervorrichtung kann die pulverförmige Ausgangskomponente in vordefinierter Menge dem Reservoir zugeführt werden.

Die erfindungsgemäße zeitlich und räumlich konstante und/oder einstellbare Pulverdosierung in den Walzenspalt ist im Hinblick auf Prozesssicherheit von großer Bedeutung. Vor diesem Hintergrund kann das Austragssystem einen Regelkreis mit zumindest einem Füllstand-Sensor aufweisen. Der Füllstand-Sensor erfasst einen Füllstand der in den Walzenspalt-Einzugsbereich gefüllten pulverförmigen Ausgangskomponente. Zudem weist der Regelkreis eine Regeleinheit auf, die auf der Grundlage des erfassten Füllstands im Walzenspalt-Einzugsbereich das Austragssystem ansteuert, um den Füllstand auf einen Sollbereich zu regeln. Bei der Bemessung des Sollbereiches ist zu beachten, dass ein zu großer Füllstand im Walzenspalt-Einzugsbereich zu einer Vorverdichtung der pulverförmigen Ausgangskomponente führen kann, während ein zu geringer Füllstand zu einer ungleichmäßigen Schichtbildung über die Beschichtungsbreite führen kann.

Zur Regelung des Füllstands im Walzenspalt-Einzugsbereich kann die Regeleinheit insbesondere die Dosiervorrichtung ansteuern, um die Menge an pulverförmiger Komponente, die dem Austragssystem zugeführt wird, einzustellen. Alternativ und/oder zusätzlich kann die Regeleinheit auch in Signalverbindung mit dem Anreger der Transportrinne und/oder dem Anreger des Siebs sein, um den Pulverfluss in Richtung Walzenspalt-Einzugsbereich zu beschleunigen oder zu verzögern.

Zur Vermeidung einer Vorverdichtung der pulverförmigen Ausgangskomponente kann im Einzugsbereich des Walzenspalts zumindest ein Abschirmelement vorgesehen sein, das die pulverförmige Ausgangskomponente von der Walzenoberfläche abschirmt. Auf diese Weise bildet das Abschirmelement eine Gleitzone, in der die pulverförmige Ausgangskomponente entlang des Abschirmelements sowie außer Kontakt mit der Walzenoberfläche in Richtung Walzenspalt gleitet, ohne vorverdichtet zu werden. Eine solche Vorverdichtung der pulverförmigen Ausgangskomponente im Einzugsbereich des Walzenspalts würde nachteilig zu einem Anstieg der Drehmomente des Walzenantriebs bis hin zu einem Ausfall des Walzenantriebs führen, wodurch die Prozesssicherheit des Beschichtungsprozesses stark beeinträchtigt wäre.

Bevorzugt ist es, wenn dem Abschirmelement ein Anreger, insbesondere eine Schlag- und/oder Rütteleinheit, zugeordnet ist. Mit Hilfe der Schlag- und/oder Rütteleinheit wird das Abschirmelement in eine Vibrationsbewegung versetzt, wodurch der Pulverfluss entlang des Abschirmelements in Richtung Walzenspalt unterstützt wird. Alternativ dazu kann ein Anreger bereitgestellt sein, der nicht unmittelbar das Abschirmelement in Vibrationsbewegung versetzt, sondern vielmehr ein Anregerelement ansteuert, das in die, in den Einzugsbereich des Walzenspalts gefüllte pulverförmige Ausgangskomponente eintauchbar ist.

Im Hinblick auf eine prozesssichere Kompaktierung ist es bevorzugt, wenn die pulverförmige Ausgangskomponente erst unmittelbar im Walzenspalt verdichtet wird. Vor diesem Hintergrund kann sich das Abschirmelement bis unmittelbar vor den Walzenspalt erstrecken.

Nachfolgend sind Ausführungsbeispiele der Erfindung anhand der beigefügten Figuren beschrieben.

Es zeigen:

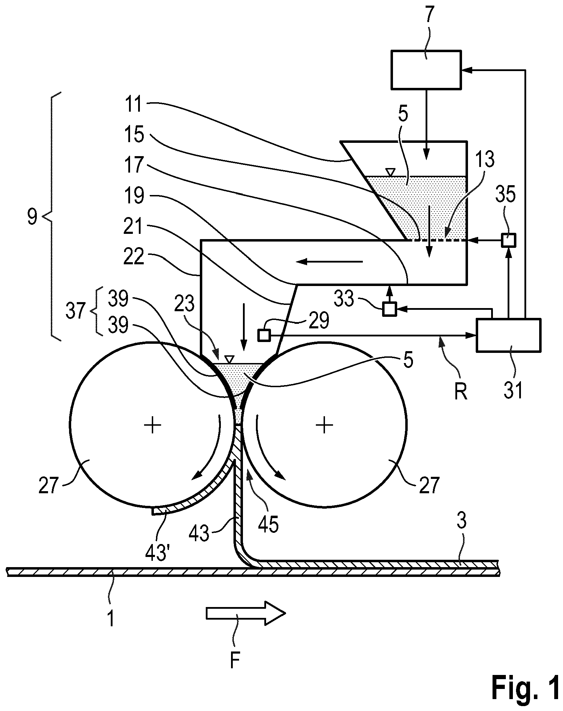

- Figuren 1 bis 9: unterschiedliche Ausführungsvarianten der erfindungsgemäßen Prozessanordnung.

In der Figur 1 ist eine Prozessanordnung gezeigt, mittels der ein Beschichtungsprozess zur Beschichtung einer Stromableiterfolie 1 mit einem Elektrodenmaterial 3 durchführbar ist. Der Beschichtungsprozess ist Bestandteil eines Verfahrens zur Fertigung einer Elektrode für eine Lithium-lonen-Batteriezelle. Erfindungsgemäß wird in dem Beschichtungsprozess eine Trockenbeschichtung durchgeführt, und zwar auf Basis einer pulverförmigen, fließfähigen Ausgangskomponente 5 des Elektrodenmaterials 3.

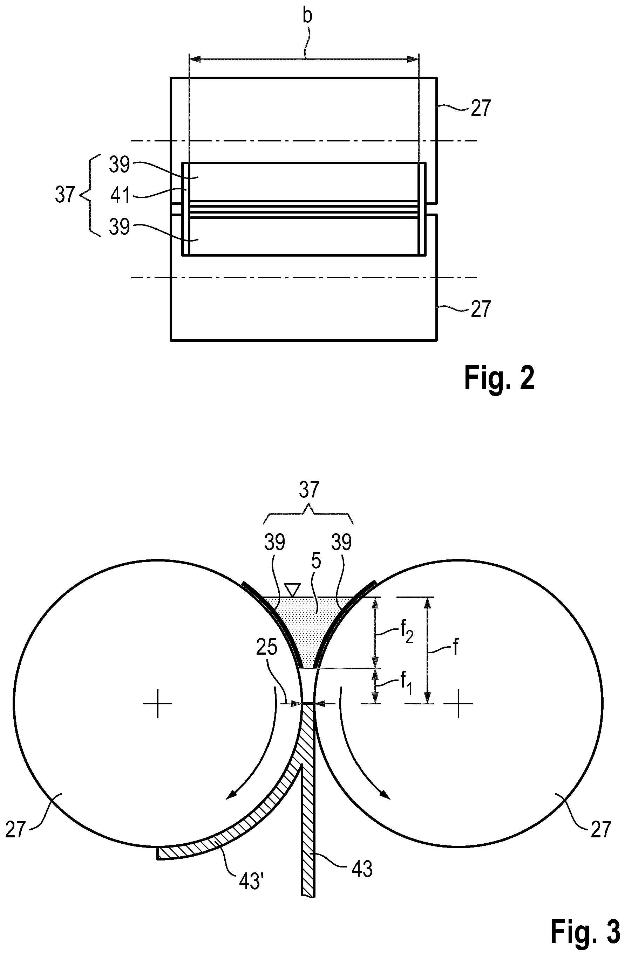

Gemäß der Figur 1 weist die Prozessanordnung eine Dosiervorrichtung 7, zum Beispiel eine gravimetrische Wäge-Einheit, sowie ein Austragssystem 9 auf. Mit Hilfe der Dosiervorrichtung 7 wird die pulverförmige Ausgangskomponente 5 einem Reservoir 11 des Austragssystems 9 zugeführt. Das Reservoir 11 weist bodenseitig eine schlitzförmige Austrittsöffnung 13 auf, der von einem Sieb 15 überdeckt ist. Während des Beschichtungsprozesses wird die pulverförmige Ausgangskomponente 5 unter Schwerkraftwirkung durch das Sieb 15 in der Austrittsöffnung 13 großflächig verteilt auf eine Transportrinne 17 abgeworfen. Der Durchlassquerschnitt der Austrittsöffnung 13 ist gegebenenfalls mit einem nicht gezeigten Schieber verstellbar. Entlang der Transportrinne 17 wird die pulverförmige Ausgangskomponente 5 in horizontaler Richtung weiter bis zu einem, in einem Abwurf-Schacht 22 befindlichen Transportrinnen-Ende 19 gefördert. Das Transportrinnen-Ende 19 ist eine Abwurfkante, von der die pulverförmige Ausgangskomponente 5 linienförmig an einer schiefen Ebene 21 in vertikaler Richtung in einen Einzugsbereich 23 eines Walzenspalts 25 (Figur 3) abgeworfen wird, der zwischen zwei rotierenden Kalanderwalzen 27 gebildet ist.

Mit Hilfe des Austragssystems 9 erfolgt ein Pulveraustrag auf den Walzenspalt-Einzugsbereich 23 über eine sich in Walzenaxialrichtung erstreckende Beschichtungsbreite b, die in der Figur 2 angedeutet ist. Die Figur 2 zeigt in einer Draufsicht den Walzenspalt 25. Die Beschichtungsbreite b entspricht dabei in etwa der Breite der Transportrinne 17 sowie der Breite der Austrittsöffnung 13.

Mit dem erfindungsgemäßen Dosierkonzept wird eine zeitlich und räumlich konstante Pulverdosierung gewährleistet, in der die pulverförmige Ausgangskomponente 5 in einem räumlich und/oder zeitlich gleichmäßigen konstanten Pulverabfluß in Richtung Walzenspalt-Einzugsbereich 23 geführt wird:
Hierfür ist das Austragssystem 9 in der Figur 1 mit einem Regelkreis R ausgebildet, der zumindest einen Füllstand-Sensor 29 aufweist. Der Füllstand-Sensor 29 erfasst einen Füllstand f (Figur 3) der im Walzenspalt-Einzugsbereich 23 befindlichen pulverförmigen Ausgangskomponente 5. Zudem weist der Regelkreis R eine Regeleinheit 31 auf, die auf der Grundlage des erfassten Füllstands f das Austragssystem 9 und/oder die Dosiervorrichtung 7 ansteuert, um den Füllstand f auf einen Sollbereich zu regeln.

Ein Kern der Erfindung besteht darin, dass das Sieb 15 und/oder die Transportrinne 17 vibrationsangeregt sind, d.h. mit Hilfe von Anregern 33, 35 in Vibrationen versatzbar sind. Die Anreger 33, 35 sind mit der Regeleinheit 31 in Signalverbindung. Mit dem vibrationsangeregten Sieb 15 wird neben einer großflächigen Dosierung der pulverförmigen Ausgangskomponente 5 auf die Transportrinne 17 auch ein räumlich und/oder zeitlich gesteuerter, insbesondere konstanter Pulverabfluß gewährleistet. Die vibrationsangeregte Transportrinne 17 wirkt als ein Vibrationsförderer, mit dessen Hilfe eine weitere Homogenisierung der Pulververteilung über die Beschichtungsbreite b erfolgt. Mit dem horizontalen Transport entlang der Transportrinne 17 sowie dem vertikalen Abwurf in den Walzenspalt-Einzugsbereich 23 wird eine Änderung der Flächenbeladung oder eine Entmischung der pulverförmigen Ausgangskomponente 5 entlang des Transportwegs verhindert. Bedarfsweise können die Anregung des Siebs 15 und die Anregung der Transportrinne 17 miteinander gekoppelt werden oder unabhängig voneinander erfolgen

Wie aus der Figur 1 weiter hervorgeht, geht die Transportrinne 17 in den Abwurf-Schacht 22 über, der nach unten mit einer im Querschnitt trichterförmigen sowie in Walzenaxialrichtung schlitzförmigen Austragsdüse 37 im Walzenspalt-Einzugsbereich 23 abschließt. In der Figur 1 weist die Austragsdüse 37 zwei Abschirmelemente 39 auf. Jedes dieser Abschirmelemente 39 erstreckt sich im Walzenspalt-Einzugsbereich 23 konturangepasst in Umfangsrichtung entlang der jeweiligen Kalanderwalze 27. Der zwischen den beiden Abschirmelementen 39 begrenzte Düsenraum ist in der Walzenaxialrichtung betrachtet beidseitig über Düsenwände 41 begrenzt. Im Düsenraum der Austragsdüse 37 sammelt sich die pulverförmige Ausgangskomponente 5 bis zu dem Füllstand f. Zur Vermeidung einer Vorverdichtung der pulverförmigen Ausgangskomponente 5 im Walzenspalt-Einzugsbereich 23 schirmen die beiden Abschirmelemente 39 die pulverförmige Ausgangskomponente 5 von den Walzenoberflächen ab. Die Abschirmelemente 39 bilden daher eine Gleitzone, in der die pulverförmige Ausgangskomponente 5 entlang der beiden Abschirmelemente 39 sowie außer Kontakt mit den Walzenoberflächen in Richtung Walzenspalt gleiten, wodurch ohne Vorverdichtung verhindert wird. Eine solche Vorverdichtung würde ansonsten zu einem Anstieg der Drehmomente des Walzenantriebs bis hin zum Ausfall des Walzenantriebs führen. Die eigentliche Verdichtung beziehungsweise Kompaktierung der pulverförmigen Ausgangskomponente 5 erfolgt somit ausschließlich im Walzenspalt 25 (Figur 3).

In der Figur 3 bemisst sich der Füllstand f ausgehend vom Walzenspalt 25. Der Füllstand f ist gemäß der Figur 3 unterteilt in eine erste Teilhöhe f₁ und in eine daran nach oben anschließende zweite Teilhöhe f₂. Wie aus der Figur 3 weiter hervorgeht, sind die beiden Abschirmelemente 39 über die erste Teilhöhe f₁ von dem Walzenspalt 25 beabstandet, so dass die pulverförmige Ausgangskomponente 5 über die erste Teilhöhe f₁ in Kontakt mit den Walzenoberflächen der beiden Kalanderwalzen 27 ist. Demgegenüber ist die pulverförmige Ausgangskomponente 5 über die zweite Teilhöhe f₂ mittels der Abschirmelemente 39 von den Walzenoberflächen abgeschirmt, um die Vorverdichtung zu unterbinden.

Im Walzenspalt 25 wird die pulverförmige Ausgangskomponente 5 unter Druck und Scherung zu einem Elektrodenmaterial-Film kompaktiert. Dieser wird an der Walzenspalt-Auslassseite 45 entweder als ein freistehender Film 43 auf die darunter befindliche Stromableiterfolie 1 aufgetragen. Alternativ kann der Elektrodenmaterial-Film auch als ein walzentragender Film 43`an einer der Kalanderwalzen 27 haften bleiben und in weiteren Prozessschritten auf die Stromableiterfolie 1 aufgebracht werden. Um die Verarbeitbarkeit der pulverfömigen Ausgangskomponente 5 im Walzenspalt 25 zu steigern, kann zum Beispiel über die Kalanderwalzen 27 eine Temperierung der pulverfömigen Ausgangskomponente 5 erfolgen.

Wie oben erwähnt ist das Transportrinnen-Ende 19 eine Abwurfkante, mittels der ein linienförmiger Abwurf der pulverförmigen Ausgangskomponente 5 erfolgt. Alternativ dazu kann anstelle eines solchen linienförmigen Abwurfes ein flächiger Abwurf direkt von dem vibrationsangeregten Sieb 15 erfolgen. In diesem Fall würde daher kein weiterer Transport der pulverförmigen Ausgangskomponente 5 über die Transportrinne 17 stattfinden.

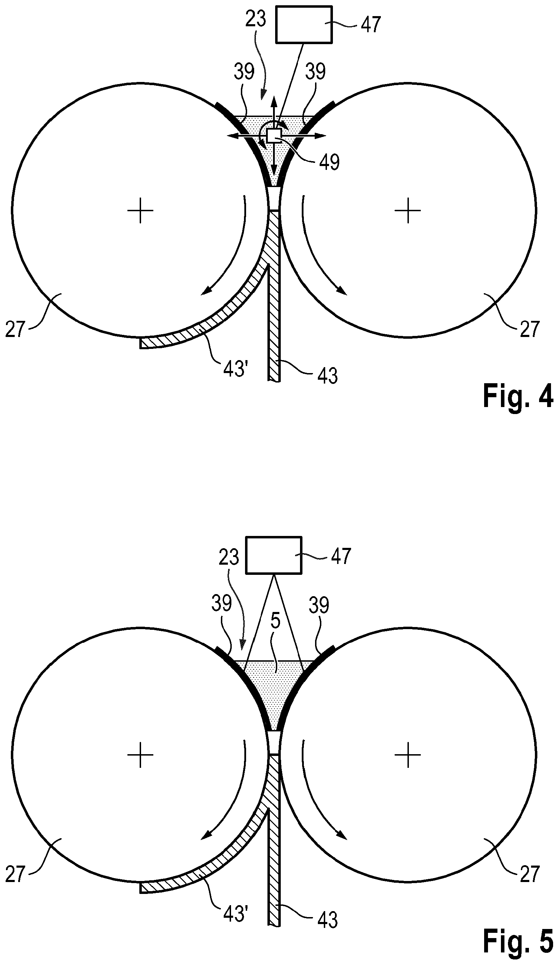

In den Figuren 4 bis 8 sind weitere Ausführungsvarianten der Erfindung angedeutet. In der Figur 4 ist der Anreger 47, etwa einem Ultraschall- oder einem elektrischen Anreger, mit einem Anregerelement 49 in Wirkverbindung, das in die, im Walzenspalt-Einzugsbereich 23 befindliche pulverförmige Ausgangskomponente 5 eingetaucht ist. Im Unterschied dazu ist in der Figur 5 der Anreger 47 unmittelbar in Wirkverbindung mit den beiden Abschirmelementen 39. Die beiden Abschirmelemente 39 können in diesem Fall nicht einstückig am Abwurf-Schacht 22 des Austragssystems 9 angeformt sein, sondern vielmehr als separate Bauteile bereitgestellt sein, um eine Vibrationsbewegung der Abschirmelemente 39 zu ermöglichen.

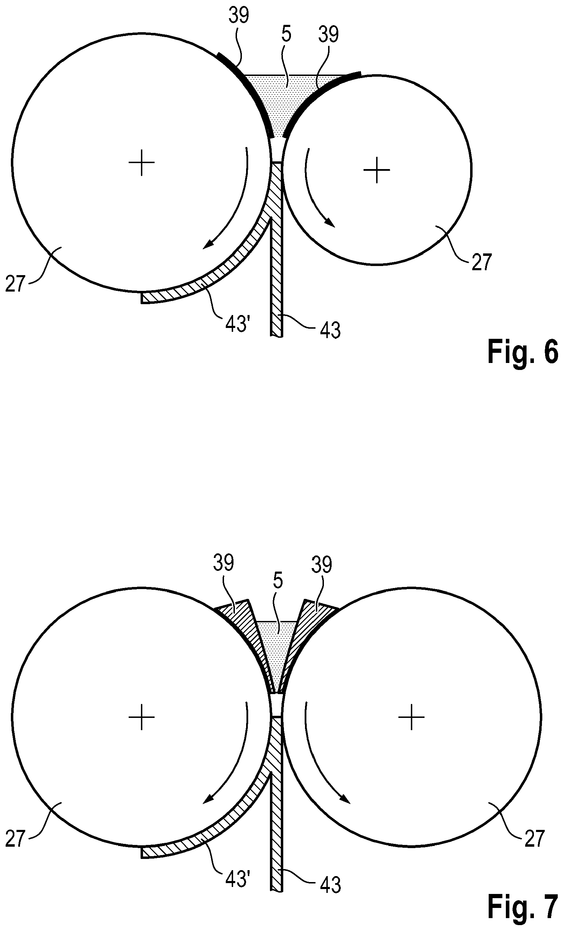

In der Figur 6 sind die beiden, den Walzenspalt 25 bildenden Kalanderwalzen 27 nicht gleich groß bemessen, sondern vielmehr unterschiedlich groß ausgeführt. Alternativ und/oder zusätzlich können sich die beiden Kalanderwalzen 27 in unterschiedlichen Rotationsgeschwindigkeiten drehen. In der Figur 7 sind die beiden Abschirmelemente 39 nicht als dünnwandige Bauteile realisiert, sondern vielmehr als keilförmige Schenkel aus Vollmaterial.

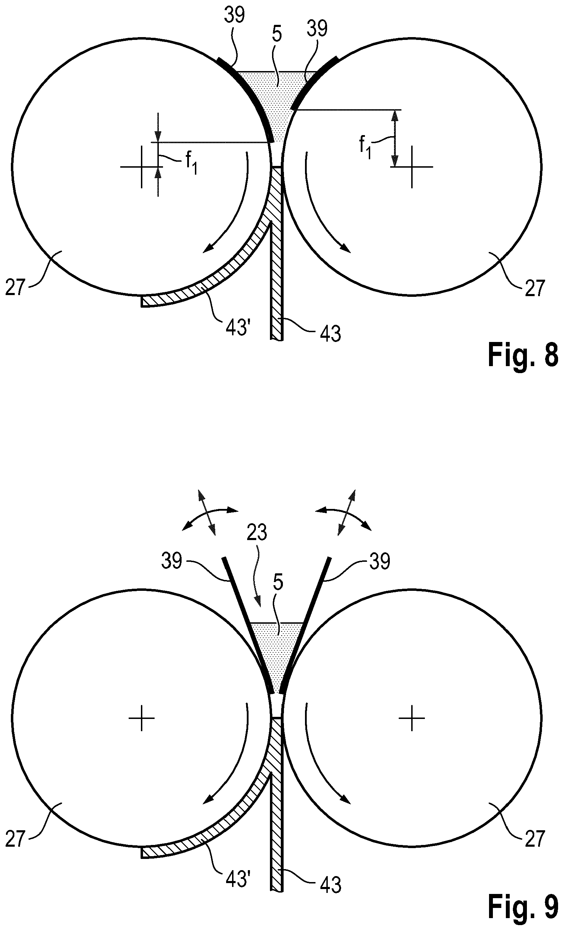

In den vorangegangenen Figuren sind die beiden Abschirmelemente 39 in gleichen Abständen, d.h. über die Teilhöhe f₁ (Figur 1) vom Walzenspalt 25 beabstandet. Im Gegensatz dazu sind in der Figur 8 die beiden Abschirmelemente 39 mit Bezug auf eine Mittelebene asymmetrisch angeordnet, d.h. über unterschiedliche Teilhöhen f₁ vom Walzenspalt 25 beabstandet.

In der Figur 9 sind die beiden Abschirmelemente 39 mittels einer Stelleinheit neigungsverstellbar, wodurch der Durchlassquerschnitt des Düsenraums zwischen den beiden Abschirmelementen 49 variierbar ist.

### Bezugszeichenliste

- 1: Stromableiterfolie
- 3: Elektrodenmaterial
- 5: pulverförmige Ausgangskomponente
- 7: Dosiervorrichtung
- 9: Austragssystem
- 11: Reservoir
- 13: Austrittsöffnung
- 15: Sieb
- 17: Transportrinne
- 19: Transportrinnen-Ende
- 21: schiefe Ebene
- 22: Abwurf-Schacht
- 23: Einzugsbereich
- 25: Walzenspalt
- 27: Kalanderwalzen
- 29: Füllstand-Sensor
- 31: Regeleinheit
- 33, 35: Anreger
- 37: Austragsdüse
- 39: Abschirmelemente
- 41: seitliche Düsenwände
- 43: Elektrodenmaterial-Film
- 45: Walzenspalt-Auslass
- 47: Anreger
- 49: Anregerelement
- b: Beschichtungsbreite
- f: Füllstandhöhe
- f₁, f₂: Teilhöhen
- R: Regelkreis

## Patentansprüche

1. Verfahren zur Herstellung einer Elektrode für eine Batteriezelle, mit einem Beschichtungsprozess, in dem eine Stromableiterfolie (1) mittels eines Austragssystems (9) mit Elektrodenmaterial (3) beschichtet wird, wobei das Austragssystem (9) ein Walzenpaar mit rotierenden Kalanderwalzen (27) aufweist, die über einen Walzenspalt (25) voneinander beabstandet sind, und wobei eine pulverförmige Ausgangskomponente (5) des Elektrodenmaterials (3) im Trockenzustand in einen Walzenspalt-Einzugsbereich (23) gefüllt und im Walzenspalt (25) unter Druck und Scherung zu einem Elektrodenmaterial-Film (43; 43`) kompaktiert wird, der auf die Stromableiterfolie (1) aufgebracht wird, **dadurch gekennzeichnet, dass** mit dem Austragssystem (9) eine zeitlich und räumlich konstante und/oder einstellbare Pulverdosierung in den Walzenspalt (25) gewährleistet ist.

2. Verfahren nach Anspruch 1, **dadurch gekennzeichnet, dass** das Austragssystem (9) ein Reservoir (11) aufweist, von dessen Austrittsöffnung (13) die pulverförmige Ausgangskomponente (5) unter Schwerkraftwirkung direkt in den Walzenspalt-Einzugsbereich (23) abgeworfen wird, oder auf eine Transportrinne (17) abgeworfen wird, entlang der die pulverförmige Ausgangskomponente (5) in horizontaler Richtung bis zu einem Transportrinnen-Ende (19) gefördert wird, von wo die pulverförmige Ausgangskomponente (5) in vertikaler Richtung in den Walzenspalt-Einzugsbereich (23) abgeworfen wird, und/oder dass insbesondere das Transportrinnen-Ende (19) eine Abwurfkante ist, an der ein linienförmiger Abwurf der pulverförmigen Ausgangskomponente (5) erfolgt.

3. Verfahren nach Anspruch 2, **dadurch gekennzeichnet, dass** die Austrittsöffnung (13) des Reservoirs (5) mit einem Sieb (15) für die Pulverdosierung überdeckt ist, durch das die im Reservoir (5) befindliche pulverförmige Ausgangskomponente (5) unter Schwerkraftwirkung abgeworfen wird, und/oder dass insbesondere das Sieb (15) mittels eines Anregers (35), etwa Ultraschall- oder elektrischer Anreger, in Vibration versetzbar ist, und/oder dass insbesondere die Transportrinne (17) mittels eines Anregers (33), etwa Ultraschall- oder elektrischer Anreger, in Vibration versetzbar ist, um insbesondere eine zeitlich und räumlich konstante und/oder einstellbare Pulverdosierung in den Walzenspalt (25) zu gewährleisten bzw. eine gleichmäßige Verteilung der pulverförmigen Ausgangskomponente (5) über eine Beschichtungsbreite (b) zu gewährleisten.

4. Verfahren nach einem der vorhergehenden Ansprüche, **dadurch gekennzeichnet, dass** mit Hilfe des Austragssystems (9) ein Pulveraustrag auf den Walzenspalt-Einzugsbereich (23) erfolgt, und zwar insbesondere über eine sich in Walzenaxialrichtung erstreckende Beschichtungsbreite (b), und/oder dass insbesondere die Breite der Transportrinne (17) und/oder der Austrittsöffnung (13) der Beschichtungsbreite (b) entspricht.

5. Verfahren nach einem der vorhergehenden Ansprüche, **dadurch gekennzeichnet, dass** die pulverförmige Ausgangskomponente (5) mittels einer Dosiervorrichtung (7), insbesondere einer gravimetrischen Wäge-Einheit, dem Reservoir (5) zugeführt wird.

6. Verfahren nach einem der vorhergehenden Ansprüche, **dadurch gekennzeichnet, dass** das Austragssystem (9) mit einem Regelkreis (R) ausgebildet ist, der zumindest einen Füllstand-Sensor (29) aufweist, der einen Füllstand (f) der im Walzenspalt-Einzugsbereich (23) befindlichen pulverförmigen Ausgangskomponente (5) erfasst, und/oder eine Regeleinheit (31) aufweist, die auf der Grundlage des erfassten Füllstands (f) im Walzenspalt-Einzugsbereich (23) das Austragssystem (9) und/oder die Dosiervorrichtung (7) ansteuert, die die pulverförmige Ausgangskomponente (5) dem Reservoir (5) zuführt.

7. Verfahren nach Anspruch 6, **dadurch gekennzeichnet, dass** zur Füllstand-Regelung im Walzenspalt-Einzugsbereich (23) die Regeleinheit (31) die Dosiervorrichtung (7) ansteuert, um die Menge an pulverförmiger Komponente (5) einzustellen, die dem Reservoir (5) zugeführt wird, und/oder dass die Regeleinheit (31) den Anreger (33, 35) des Siebes (15) und/oder der Transportrinne (17) ansteuert, um den Pulverfluss in Richtung Walzenspalt-Einzugsbereich (23) einzustellen.

8. Verfahren zur Herstellung einer Elektrode für eine Batteriezelle, insbesondere nach einem der vorhergehenden Ansprüche, mit einem Beschichtungsprozess, in dem eine Stromableiterfolie (1) mittels eines Austragssystems (9) mit Elektrodenmaterial (3) beschichtet wird, wobei das Austragssystem (9) ein Walzenpaar mit rotierenden Kalanderwalzen (27) aufweist, die über einen Walzenspalt (25) voneinander beabstandet sind, und wobei eine pulverförmige Ausgangskomponente (5) des Elektrodenmaterials (3) im Trockenzustand in einen Walzenspalt-Einzugsbereich (23) gefüllt und im Walzenspalt (25) unter Druck und Scherung zu einem Elektrodenmaterial-Film (43, 43`) kompaktiert wird, der auf die Stromableiterfolie (1) aufgebracht wird, **dadurch gekennzeichnet, dass** zur Vermeidung einer Vorverdichtung der pulverförmigen Ausgangskomponente (5) im Walzenspalt-Einzugsbereich (23) zumindest ein Abschirmelement (39) vorgesehen ist, das die pulverförmige Ausgangskomponente (5) von einer Walzenoberfläche abschirmt, und zwar insbesondere unter Bildung einer Gleitzone, in der die pulverförmige Ausgangskomponente (5) entlang des Abschirmelements (39) sowie kontaktfrei zur Walzenoberfläche in Richtung Walzenspalt (25) gleitet.

9. Verfahren nach Anspruch 8, **dadurch gekennzeichnet, dass** dem Abschirmelement (39) ein Anreger (47), etwa eine Schlag- und/oder Rütteleinheit, zugeordnet ist, und dass insbesondere mittels des Anregers (47) das Abschirmelement (39) in Vibration versetzt wird, um einen Pulverfluss in Richtung Walzenspalt (25) zu unterstützen, oder dass ein Anreger (47) bereitgestellt ist, mit dem ein Anregerelement (49) ansteuerbar ist, das in die in den Walzenspalt-Einzugsbereich (23) gefüllte pulverförmige Ausgangskomponente (5) eingetaucht ist, und/oder dass sich das Abschirmelement (39) bis unmittelbar vor den Walzenspalt (25) erstreckt und insbesondere über eine Teilhöhe (f₁) vom Walzenspalt (25) beabstandet ist.

10. Prozessanordnung zur Durchführung eines Verfahrens nach einem der vorhergehenden Ansprüche.
